# EUROPÄISCHE PATENTANMELDUNG

(11) **EP 1 450 475 A1**
(43) Veröffentlichungstag der Anmeldung: **25.08.2004**
(21) Anmeldenummer: 03405097.1
(22) Anmeldetag: 19.02.2003
(51) Int. Cl.: H02M 5/458

(54) **Schwingungsarme Umrichterschaltung**

(71) Anmelder: ABB Schweiz AG, 5400 Baden (CH)
(72) Erfinder: Knapp, Gerold, 5408 Ennetbaden (CH); Mauron, Pascal, 3982 Überstorf (CH); Stemmler, Christoph, 5402 Baden (CH)
(74) Vertreter: ABB Patent Attorneys

(57) **Zusammenfassung**

Es wird eine Umrichterschaltung angegeben, die einen durch mindestens einen Energiespeicher (6) gebildeten Gleichspannungskreis (1) aufweist und mindestens ein für jede Phase (R, S, T) vorgesehenes und zu jedem Energiespeicher (6) parallel geschaltetes Zweigpaar (2) umfasst, wobei jedes Zweigpaar (2) Leistungshalbleiterschalter aufweist. Weiterhin weist die Umrichterschaltung ein durch einen Kondensator gebildetes und für jedes Zweigpaar (2) vorgesehenes Spannungsbegrenzungsnetzwerk (3) auf, welches jeweils parallel zu dem zugehörigen Zweigpaar (2) geschaltet ist. Zur Dämpfung von Schwingungen und somit zur Erzielung einer schwingungsarmen Umrichterschaltung ist mindestens ein Dämpfungsnetzwerk (4) vorgesehen, welches parallel zu jedem Energiespeicher (6) des Gleichspannungskreises (1) geschaltet ist.

## Beschreibung

### Technisches Gebiet

Die Erfindung bezieht sich auf das Gebiet der Leistungselektronik. Sie geht aus von einer Umrichterschaltung gemäss dem Oberbegriff des unabhängigen Anspruchs.

### Stand der Technik

Leistungshalbleiterschalter werden derzeit vermehrt in der Umrichtertechnik und insbesondere in Umrichterschaltungen zur Schaltung von mehreren Spannungsniveaus eingesetzt. Besonders wichtig bei solchen Umrichterschaltungen ist es, dass beim Schaltvorgang der Leistungshalbleiterschalter der Umrichterschaltungen, insbesondere für Hochleistungsumrichterschaltungen zur Schaltung von hohen Spannungen und zur gleichzeitigen Führung hoher Ströme, unbeabsichtigte Nebeneffekte in Form von Schwingungen gemindert oder vermieden werden. Dazu sind eine Fülle von Beschaltungen für Umrichterschaltungen bekannt. Eine Umrichterschaltung mit einer entsprechenden Beschaltung zur Begrenzung von Überspannungen an Leistungshalbleiterschaltern ist beispielsweise in "Semikron - Applikationshandbuch IGBT- und MOSFET Leistungsmodule, 2002" angegeben. Darin weist die Umrichterschaltung einen durch einen Energiespeicher gebildeten Gleichspannungskreis auf, wobei als Energiespeicher ein Kondensator vorgesehen ist. Für jede Phase der Umrichterschaltung ist ein parallel zu dem Energiespeicher geschaltetes Zweigpaar vorgesehen, wobei jedes Zweigpaar Leistungshalbleiterschalter aufweist. In "Semikron - Applikationshandbuch IGBT- und MOSFET Leistungsmodule, 2002" ist jedes Zweigpaar aus zwei in Serie geschalteten Leistungshalbleiterschaltern gebildet. Der Energiespeicher des Gleichspannungskreises und die Zweigpaare sind gängigerweise über eine Verschienung verbunden, die eine parasitäre Induktivität aufweist. Dem von dieser parasitären Induktivität geführten Strom muss nach dem Abschaltvorgang des jeweiligen Leistungshalbleiterschalters ein Ausweichpfad in der Umrichterschaltung angeboten werden, um eine durch den Strom bedingte Überspannung am jeweiligen Leistungshalbleiterschalter zu begrenzen. In "Semikron - Applikationshandbuch IGBT- und MOSFET Leistungsmodule, 2002" ist dazu eine passive Beschaltung der Umrichterschaltung in Form eines Spannungsbegrenzungsnetzwerkes für jedes Zweigpaar vorgesehen, welches jeweils durch einen Kondensator gebildet ist. Jedes dieser Spannungsbegrenzungsnetzwerke ist zu dem zugehörigen Zweipaar parallel geschaltet.

Problematisch bei dem durch einen Kondensator gebildeten Spannungsbegrenzungsnetzwerk ist, dass zwar die Überspannung am jeweiligen Leistungshalbleiterschalter begrenzt wird, jedoch bildet der Kondensator des Spannungsbegrenzungsnetzwerkes zusammen mit der parasitären Induktivität und dem Kondensator des Gleichspannungskreises einen Oszillationspfad, welcher nur schwach gedämpft ist und bei jedem Schaltvorgang des entsprechenden Leistungshalbleiterschalters, insbesondere beim Abschalten neu zu Schwingungen angeregt wird. Die in der parasitären Induktivität gespeicherte elektrische Energie bewirkt bei solchen Schwingungen eine Stromamplitude dieser Schwingungen, die in der Grössenordnung des abgeschalteten Stromes liegt. Die Dämpfung dieser Schwingungen und damit die Vernichtung der in der parasitären Induktivität gespeicherten elektrischen Energie erfolgt ausschliesslich durch Fliessen des Stromes in ohmschen Widerstandsanteilen des Kondensators des Gleichspannungskreises, des Kondensators des Spannungsbegrenzungsnetzwerkes und der Verschienung. Dies führt zu höheren elektrischen und thermischen Belastungen dieser Komponenten bezüglich Verlustleistung.

### Darstellung der Erfindung

Aufgabe der Erfindung ist es deshalb, eine Umrichterschaltung derart weiterzubilden, dass sich die Überspannungsbelastung und die Abklingzeit der Überspannung an Leistungshalbleiterschaltern der Umrichterschalter, insbesondere bei deren Abschalten, in einfacher Weise weiter reduzieren lässt und gleichzeitig elektrische Schwingungen und die damit einhergehende elektrische und thermische Belastung weiterer Komponenten weitestgehend vermieden werden. Diese Aufgabe wird durch die Merkmale des Anspruchs 1 gelöst. In den abhängigen Ansprüchen sind vorteilhafte Weiterbildungen der Erfindung angegeben.

Die erfindungsgemässe Umrichterschaltung weist einen durch mindestens einen Energiespeicher gebildeten Gleichspannungskreis auf, wobei zudem für jede Phase der Umrichterschaltung mindestens ein parallel zu jedem Energiespeicher geschaltetes Zweigpaar vorgesehen ist. Jedes Zweigpaar weist einen oder mehrere Leistungshalbleiterschalter auf. Weiterhin ist ein durch einen Kondensator gebildetes und für jedes Zweigpaar vorgesehenes Spannungsbegrenzungsnetzwerk vorgesehen, welches jeweils parallel zu dem zugehörigen Zweigpaar geschaltet ist. Vorzugsweise ist das Spannungsbegrenzungsnetzwerk niederinduktiv mit dem zugehörigen Zweigpaar verbunden. Erfindungsgemäss ist mindestens ein Dämpfungsnetzwerk vorgesehen, welches parallel zu jedem Energiespeicher geschaltet ist. Das Dämpfungsnetzwerk bewirkt vorteilhaft, dass eine durch das Schalten, insbesondere durch das Abschalten eines Leistungshalbleiterschalters der Umrichterschaltung angeregte elektrische Schwingung im Oszillationspfad "Kondensator des Spannungsbegrenzungsnetzwerkes - parasitäre Induktivität einer Verschienung der Zweigpaare mit dem Gleichspannungskreis - Energiespeicher des Gleichspannungskreises" gedämpft wird. Die hohe Stromamplitude dieser Schwingung und die daraus resultierende Überspannung am Leistungshalbleiterschalter nach dessen Abschaltvorgang, welche Überspannung durch den Kondensator des Spannungsbegrenzungsnetzwerkes bereits begrenzt wird, kann somit weiter reduziert werden, da sich der Strom, welcher ursprünglich als elektrische Energie in der parasitären Induktivität gespeichert war, nun zwischen dem Dämpfungsnetzwerk und dem Kondensator des Spannungsbegrenzungsnetzwerkes aufteilt. Die vorstehend angesprochene Dämpfung bewirkt weiterhin vorteilhaft, dass die durch den Abschaltvorgang des entsprechenden Leistungshalbleiterschalters angeregte elektrische Schwingung bezüglich des Stromes schneller abklingt und die durch den Strom bedingte Überspannung am entsprechenden Leistungshalbleiterschalter reduziert wird und ebenfalls schneller abklingen kann. Darüber hinaus werden durch die vorstehend erwähnte Dämpfung der durch den Abschaltvorgang des entsprechenden Leistungshalbleiterschalters angeregten elektrischen Schwingung Überlagerungseffekte solcher Schwingungen, welche durch Schalthandlungen von mehreren kurz aufeinander schaltenden Leistungshalbleiterschalter der Zweigpaare auftreten können, vorteilhaft vermindert. Insgesamt kann somit mittels des Dämpfungsnetzwerkes und der damit bewirkten und vorstehend beschriebenen Dämpfung der elektrischen Schwingung der Strom im vorstehend angesprochenen Oszillationspfad vermindert werden und damit die elektrische und thermische Belastung weiterer Komponenten der Umrichterschaltung weitestgehend vermieden werden.

Die erfindungsgemässe Umrichterschaltung eignete sich besonders für eine hohe Anzahl an Zweigpaaren, für hohe Ströme durch die entsprechenden Zweigpaare und für eine hohe Spannungsauslastung der Zweigpaare.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigt:
- Fig. 1: eine erste Ausführungsform einer erfindungsgemässen Umrichterschaltung zur Schaltung von zwei Spannungsniveaus und
- Fig. 2: eine zweite Ausführungsform einer erfindungsgemässen Umrichterschaltung zur Schaltung von drei Spannungsniveaus.

Die in der Zeichnung verwendeten Bezugszeichen und deren Bedeutung sind in der Bezugszeichenliste zusammengefasst aufgelistet. Grundsätzlich sind in den Figur gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

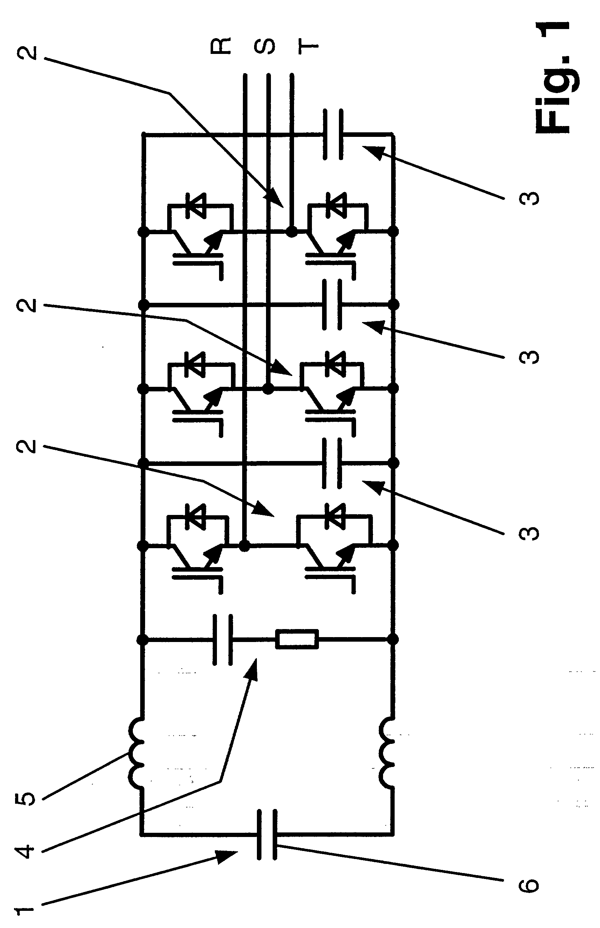

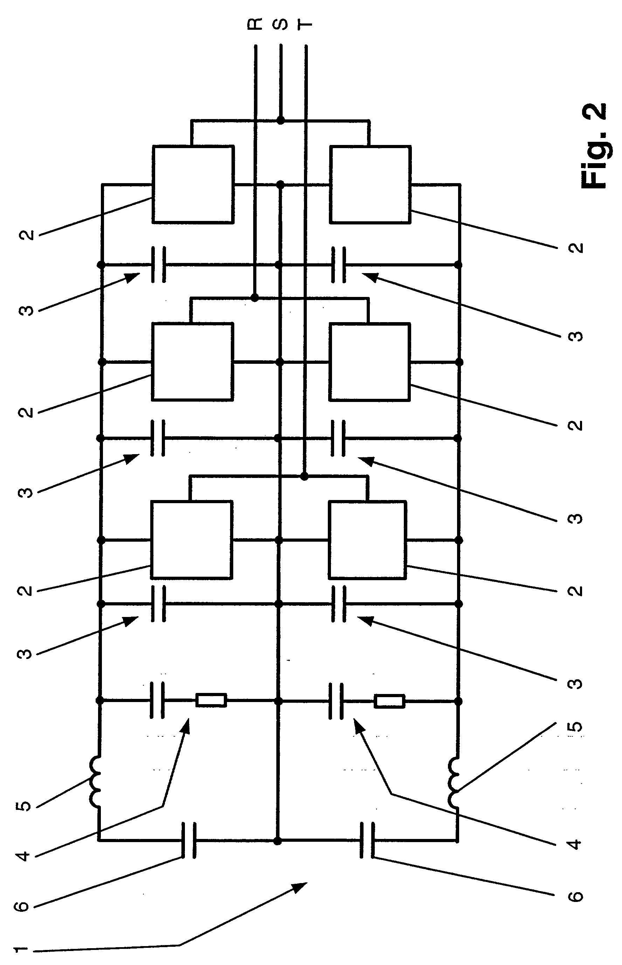

In Fig. 1 ist eine erste Ausführungsform einer erfindungsgemässen Umrichterschaltung zur Schaltung von zwei Spannungsniveaus gezeigt. Weiterhin ist in Fig. 2 eine zweite Ausführungsform einer erfindungsgemässen Umrichterschaltung zur Schaltung von drei Spannungsniveaus gezeigt. In Fig. 1 und Fig. 2 weist die Umrichterschaltung allgemein einen durch mindestens einen Energiespeicher 6 gebildeten Gleichspannungskreis 1 und mindestens ein für jede Phase R, S, T vorgesehenes und parallel zu jedem Energiespeicher 6 geschaltetes Zweigpaar 2 auf. Gemäss Fig. 1 ist der Energiespeicher 6 als ein Kondensator ausgebildet, wobei auch mehrere in Serie oder parallel geschaltete Kondensatoren denkbar sind. In Fig. 2 hingegen ist der Gleichspannungskreis 1 aus zwei Energiespeichern 6, nämlich aus zwei in Serie geschalteten Kondensatoren mit herausgeführtem Mittelabgriff gebildet. Auch in diesem Fall kann jeder Energiespeicher 6 aus einer Mehrzahl an in Serie oder parallel geschalteten Kondensatoren gebildet sein.

Gemäss der Ausführungsform nach Fig. 1 ist jedes Zweigpaar 2 aus zwei in Serie geschalteten Leistungshalbleiterschaltern gebildet. Die Anordnung und Verschaltung der Zweigpaare 2 gemäss Fig. 1 entspricht einer gängigen Umrichterschaltung zur Schaltung von zwei Spannungsniveaus und ist auch als "Zwei-Punkt-Umrichterschaltung" bekannt. Die Anordnung und Verschaltung der Zweigpaare 2 gemäss der Ausführungsform nach Fig. 2 entspricht einer gängigen Umrichterschaltung zur Schaltung von drei Spannungsniveaus und ist auch als "Drei-Punkt-Umrichterschaltung" bekannt, wobei die Anzahl der Leistungshalbleiterschalter eines jeden Zweigpaares 2 für die Ausführungsform einer "Drei-Punkt-Umrichterschaltung gemäss Fig. 2 und die Verschaltung der Leistungshalbleiterschalter auch bekannt sind. Allgemein weist somit jedes Zweigpaar 2 eine beliebige Anzahl an Leistungshalbleiterschaltern auf, wobei auch Ausführungsformen mit nur einem einziger Leistungshalbleiterschalter für jedes Zweigpaar 2 denkbar sind. In den Ausführungsformen der erfindungsgemässen Umrichterschaltung gemäss Fig. 1 und Fig. 2 ist die Umrichterschaltung beispielhaft jeweils dreiphasig ausgeführt. Allgemein kann die erfindungsgemässe Umrichterschaltung gemäss Fig. 1 und Fig. 2 eine beliebige Anzahl Phasen aufweisen, wobei dann, wie bereits erwähnt, für jede Phase ein Zweigpaar 2 mit den entsprechenden Leistungshalbleiterschaltern vorgesehen ist.

Vorzugsweise ist jeder Leistungshalbleiterschalter als ansteuerbarer bidirektionaler Leistungshalbleiterschalter, insbesondere als Bipolartransistor mit isoliert angeordneter Ansteuerelektrode (IGBT) mit zusätzlich antiparallel geschalteter Diode ausgeführt. Selbstverständlich ist es auch denkbar, dass ein solcher vorstehend genannter ansteuerbarer bidirektionaler Leistungshalbleiterschalter beispielsweise als Abschaltthyristor, wie beispielweise GTO oder IGCT mit entsprechender Beschaltung, oder als Leistungs-MOSFET mit antiparallel geschalteter Diode ausgeführt sein kann.

Gemäss Fig. 1 und Fig. 2 weist die Umrichterschaltung weiterhin ein durch einen Kondensator gebildetes und für jedes Zweigpaar 2 vorgesehenes Spannungsbegrenzungsnetzwerk 3 auf, welches jeweils parallel zu dem zugehörigen Zweigpaar 2 geschaltet ist. Vorzugsweise ist jedes Spannungsbegrenzungsnetzwerk 3 niederinduktiv mit dem zugehörigen Zweigpaar 3 verbunden. Erfindungsgemäss ist mindestens ein Dämpfungsnetzwerk 4 vorgesehen, welches parallel zu dem Gleichspannungskreis 1 geschaltet ist. Das Dämpfungsnetzwerk 4 bewirkt vorteilhaft, dass eine durch das Schalten, insbesondere durch das Abschalten eines Leistungshalbleiterschalters der Umrichterschaltung angeregte elektrische Schwingung im Oszillationspfad "Kondensator des Spannungsbegrenzungsnetzwerkes 3 - parasitäre Induktivität 5 einer Verschienung der Zweigpaare 2 mit dem Gleichspannungskreis 1 - Kondensator des Gleichspannungskreises 1" gedämpft wird. Die bei einer solchen Schwingung auftretenden hohe Stromamplitude einer solchen Schwingung bewirkt eine Überspannung am Leistungshalbleiterschalter nach dessen Abschaltvorgang, wobei diese Überspannung durch den Kondensator des Spannungsbegrenzungsnetzwerkes 3 bereits begrenzt wird. Durch das Dämpfungsnetzwerk 4 kann diese Überspannung am entsprechenden Leistungshalbleiterschalter sehr vorteilhaft weiter reduziert werden, da sich der Strom, der ursprünglich als elektrische Energie in der parasitären Induktivität 5 gespeichert war, dann zwischen dem Dämpfungsnetzwerk 4 und dem Kondensator des Spannungsbegrenzungsnetzwerkes 3 aufteilen kann und somit keine wie aus dem Stand der Technik bekannte hohe Überspannung bewirkt. Die vorstehend angesprochene Dämpfung der Schwingung bewirkt weiterhin vorteilhaft, dass die durch den Abschaltvorgang des entsprechenden Leistungshalbleiterschalters angeregte elektrische Schwingung bezüglich des Stromes schneller abklingt und die durch den Strom bedingte Überspannung am entsprechenden Leistungshalbleiterschalter ebenfalls schneller abklingen kann. Ferner werden durch die vorstehend erwähnte Dämpfung der durch den Abschaltvorgang des entsprechenden Leistungshalbleiterschalters angeregten elektrischen Schwingung Überlagerungseffekte solcher Schwingungen, die durch Schalthandlungen von mehreren kurz aufeinander schaltenden Leistungshalbleiterschalter verschiedener Zweigpaare 2 auftreten können, vorteilhaft vermindert. Mittels des Dämpfungsnetzwerkes 4 ist somit eine schwingungsarme Umrichterschaltung erreicht, wobei durch die vorstehendend detailliert erläuterte Dämpfung der elektrischen Schwingung ein Strom im vorstehend genannten Oszillationspfad vermindert wird und damit die elektrische und thermische Belastung weiterer Komponenten, insbesondere der Verschienung und der Verbindungsleitungen der Umrichterschaltung weitestgehend vermieden werden. Insgesamt wirkt, d.h. dämpft das Dämpfungsnetzwerk 4 die auftretende Schwingung zentral für sämtliche Zweigpaare 2 der Umrichterschaltung.

Um eine gute Wirkung des Dämpfungsnetzwerkes 4 zu erreichen, hat es sich als vorteilhaft erwiesen, dass die Verbindungen, insbesondere die Verbindungsleitungen zum Gleichspannungskreis 1 und zu den Zweigpaaren 2 niederinduktiv ausgebildet sind.

Gemäss Fig. 1 ist das Dämpfungsnetzwerk 4 der Umrichterschaltung erfindungsgemäss aus einem Kondensator und einem zu dem Kondensator in Serie geschalteten Widerstand gebildet. Da das Dämpfungsnetzwerk 4 nur einmal oder in sehr geringer Anzahl für einen Gleichspannungskreis 1 vorgesehen ist, muss auch nur ein Kondensator und ein Widerstand für das beziehungsweise jedes Dämpfungsnetzwerk 4 vorgesehen werden. Zusammen mit dem für jedes Zweigpaar 2 vorgesehenen Spannungsbegrenzungsnetzwerk 3 kann somit die Bauelementeanzahl der Umrichterschaltung vorteilhaft gering gehalten werden. Um eine weitere Verbesserung der Dämpfung zu erzielen, werden, wie vorstehend erwähnt, mehrere Dämpfungsnetzwerke 4 in geringer Anzahl für einen Gleichspannungskreis 1 verwendet. Das Dämpfungsnetzwerk 4 ist durch die Anordnung am Gleichspannungskreis 1 an einer zentralen Stelle in der erfindungsgemässen Umrichterschaltung angeordnet, wodurch die Verlustenergie im Widerstand des Dämpfungsnetzwerkes 4, welche durch die Dämpfung der vorstehend detailliert beschriebenen elektrischen Schwingung generiert wird, zentral abgeführt werden kann. Durch die zentrale Anordnung des Dämpfungsnetzwerkes 4 ist weiterhin eine mechanische Vereinfachung der erfindungsgemässen Umrichterschaltung erzielt und eine platzsparende Realisierung möglich.

Zur Abführung der Verlustenergie verfügt der Widerstand des Dämpfungsnetzwerkes 4 vorzugsweise über ein in Fig. 1 der Übersichtlichkeit halber nicht dargestelltes eigenständiges Widerstandskühlsystem, mit dem der Widerstand thermisch kontaktiert ist. Es ist aber auch denkbar, dass die Leistungshalbleiterschalter der Zweigpaare 2 mit einem in Fig. 1 der Übersichtlichkeit halber ebenfalls nicht dargestellten Leistungshalbleiterschalterkühlsystem thermisch kontaktiert sind und der Widerstand des Dämpfungsnetzwerkes 4 dann mit diesem Leistungshalbleiterschalterkühlsystem thermisch kontaktiert ist. Da die Verlustenergie bei dieser Ausführungsform mittels nur eines Kühlsystems abgeführt wird, ist eine besonders einfache, platzsparende und damit kostengünstige Realisierung der erfindungsgemässen Umrichterschaltung erreicht.

Es hat sich ferner als vorteilhaft erwiesen, dass der Wert des Kondensators des Dämpfungsnetzwerkes 4 in der Grössenordnung 1.5 bis 50-fach grösser als der Wert des Kondensators des Spannungsbegrenzungsnetzwerkes 3 gewählt ist.

Die erfindungsgemässe Umrichterschaltung zeichnet sich insgesamt durch einen sehr schwingungsarmen Aufbau, insbesondere aufgrund des Dämpfungsnetzwerkes 4, aus, kommt mit einer Minimalanzahl an zusätzlichen Bauelemente aus und ist weiterhin bezüglich ihres Aufbaus einfach, platzsparend und somit kostengünstigen realisierbar.

### Bezugszeichenliste

- 1: Gleichspannungskreis
- 2: Zweigpaar
- 3: Spannungsbegrenzungsnetzwerk
- 4: Dämpfungsnetzwerk
- 5: parasitäre Induktivität
- 6: Energiespeicher

## Patentansprüche

1. Umrichterschaltung mit einem durch mindestens einen Energiespeicher (6) gebildeten Gleichspannungskreis (1),
mit mindestens einem für jede Phase (R, S, T) vorgesehenen und zu jedem Energiespeicher (6) parallel geschalteten Zweigpaar (2), wobei jedes Zweigpaar (2) Leistungshalbleiterschalter aufweist,
mit einem durch einen Kondensator gebildetes und für jedes Zweigpaar () vorgesehenes Spannungsbegrenzungsnetzwerk (3), welches jeweils parallel zu dem zugehörigen Zweigpaar (2) geschaltet ist, **dadurch gekennzeichnet,**
**dass** mindestens ein Dämpfungsnetzwerk (4) vorgesehen ist, welches parallel zu jedem Energiespeicher (6) des Gleichspannungskreises (1) geschaltet ist.

2. Umrichterschaltung nach Anspruch 1, **dadurch gekennzeichnet, dass** das Dämpfungsnetzwerk (4) aus einem Kondensator und einem zu dem Kondensator in Serie geschalteten Widerstand gebildet ist.

3. Umrichterschaltung nach Anspruch 2, **dadurch gekennzeichnet, dass** der Widerstand mit einem eigenständigen Widerstandskühlsystem thermisch kontaktiert ist.

4. Umrichterschaltung nach Anspruch 2, **dadurch gekennzeichnet, dass** die Leistungshalbleiterschalter der Zweigpaare 2 mit einem Leistungshalbleiterschalterkühlsystem thermisch kontaktiert sind,
und dass der Widerstand mit dem Leistungshalbleiterschalterkühlsystem thermisch kontaktiert ist.

5. Umrichterschaltung nach einem der Ansprüche 2 bis 4, **dadurch gekennzeichnet, dass** der Wert des Kondensators des Dämpfungsnetzwerkes (4) in der Grössenordnung 1.5 bis 50-fach grösser als der Wert des Kondensators des Spannungsbegrenzungsnetzwerkes (3) gewählt ist.
